# FASCICULE DE BREVET EUROPEEN

(11) **EP 3 118 143 B1**
(45) Date de publication et mention de la délivrance du brevet: **29.11.2017**
(21) Numéro de dépôt: 16178982.1
(22) Date de dépôt: 12.07.2016
(51) Int. Cl.: B65G 47/14

(54) **DISPOSITIF CENTRIFUGE DESTINE A ORGANISER DES PRODUITS EN VRAC**
SCHLEUDERVORRICHTUNG ZUR ORGANISATION VON SCHÜTTGUT-PRODUKTEN
CENTRIFUGAL DEVICE FOR ORGANISING BULK PRODUCTS

(30) Priorité: 13.07.2015 FR 1556650
(43) Date de publication de la demande: 18.01.2017
(73) Titulaire: Velec Systemes, 59910 Bondues (FR)
(72) Inventeur: BILLARD, ANTOINE, 59390 TOUFFLERS (FR)
(74) Mandataire: Cabinet Plasseraud

(56) Documents cités:
- EP-A1- 0 462 911
- JP-A- S60 204 518
- JP-A- 2004 059 262

## Description

L'invention est relative à un dispositif centrifuge destiné à organiser à haute vitesse des produits en vrac.

L'invention trouve une application particulière, non limitative, dans le domaine de l'emballage, lorsqu'il est requis d'automatiser la mise en emballage de produits livrés en vrac, les produits pouvant être alimentaires, ou non.

De tels dispositifs centrifuges permettent, à partir de produits en vrac, d'organiser les produits en file, les uns à la suite des autres, dans une orientation donnée, ce qui permet ensuite de former des lots de produits, puis de procéder à l'emballage des lots de produits.

Plus encore, l'invention trouve une application particulière, non limitative, pour organiser des produits sensibles à la détérioration/déchirement. De tels produits sensibles se déchirent/détériorent facilement lorsque manipulés sans soin. Outre les pertes de produits engendrées, de tels produits peuvent provoquer des interruptions de production, en particulier dans le domaine alimentaire. A titre d'exemple, et lorsque les produits sont des saucisses, le déchirement d'une saucisse engendre des souillures de viande sur l'outil de production qui, bien souvent, n'est pas d'accès aisé et facile à nettoyer. De telles dégradations diminuent par ailleurs le rendement de la machine en ce que de tels produits détériorés sont des pertes sèches.

L'invention s'intéresse plus particulièrement au type de dispositifs centrifuges du type connu du document EP.0.462.911. A1, qui correspond au préambule de la revendication 1 et qui comprend une cuve destinée à recevoir les produits en vrac, y compris un plateau repéré 40, tournant, incliné par rapport à l'axe de la cuve constituant le fond de cuve, et un bord de cuve (appelé « couronne concentrique » repérée 55), tournant dans le même sens que le plateau, et définissant une piste horizontale coaxiale à la cuve, s'étendant le long de la périphérie de la cuve. Dans un tel dispositif, le bord de cuve est situé en hauteur au niveau du point le plus haut du plateau, définissant en cet endroit une zone de transfert de produits centrifugés entre le plateau et le bord de cuve. Typiquement, le bord de cuve est entrainé en rotation, dans le même sens que le plateau, mais à une vitesse de rotation supérieure à celle du plateau.

Un tel dispositif centrifuge permet d'organiser des produits en vrac disposés dans la cuve, qui sont, sous l'effet de la force centrifuge engendrée par le plateau tournant amenés jusqu'à la zone de transfert, puis transférés depuis le plateau sur le bord de cuve qui les convoie en file, les uns à la suite des autres et jusqu'à une sortie physique du dispositif, situé en périphérie de cuve.

Typiquement, la largeur active du bord de cuve est réglée, légèrement inférieure à la dimension en largeur du produit, et afin de permettre la présence d'un seul produit sur la largeur du bord de cuve. Autrement dit, la largeur active du bord de cuve est déterminée afin d'éviter la présence de deux produits en recouvrement sur la largeur (active) du bord de cuve. Ce réglage est typiquement permis par un ajustement de la position radiale d'un guide sensiblement vertical, appelé ceinture, s'étendant sur le diamètre externe du bord de cuve périphérique, et sur lequel sont plaqués les produits présents sur le bord de cuve sous l'effet de la force centrifuge.

Toutefois, en pratique, en particulier pour les produits longs, il peut arriver que deux produits se recouvrent sur la largeur du bord périphérique et provoquent un bourrage à la sortie du dispositif centrifuge qui physiquement, n'autorise pas le passage de tels produits mal positionnés.

De tels bourrages sont fréquents, ce qui oblige concrètement la présence d'un opérateur dont la seule action est de débourrer manuellement (ou plus fréquemment aidé d'un outil à main) les produits bloqués à la sortie du dispositif.

Il existe depuis longtemps un besoin pour automatiser cette action de débourrage, en particulier pour des produits sensibles à la détérioration. Toutefois et selon les constatations de la Demanderesse, aucune solution technique ne s'est avérée aujourd'hui satisfaisante pour répondre à ce besoin.

Le but de la présente invention est de pallier les inconvénients précités en proposant un dispositif centrifuge destiné à organiser des produits en vrac, avantageusement pourvu d'un système de débourrage automatique.

Un autre but de la présente invention est de proposer un tel dispositif centrifuge qui convienne, au moins selon un mode de réalisation, pour des produits sensibles à la détérioration, c'est-à-dire, permettant d'organiser des tels produits, et sans risque de détérioration desdits produits, même lors de la mise en oeuvre d'une séquence de débourrage automatisée.

Un autre but de la présente invention est de proposer, au moins selon un mode de réalisation, un tel dispositif centrifuge, dont le mécanisme, en particulier celui de son système de débourrage automatique, n'impose pas la présence de carter de sécurité (à savoir une sécurité anti-pincement) : au moins selon un mode de réalisation, l'accès supérieur à la cuve est totalement libre, ce qui est un grand avantage, par exemple pour des applications alimentaires qui requièrent un nettoyage fréquent des surfaces du dispositif (telles que celle du plateau et du bord de cuve) destinées à être en contact avec les produits.

D'autres buts et avantages de la présente invention apparaîtront au cours de la description qui va suivre qui n'est donnée qu'à titre indicatif et qui n'a pas pour but de la limiter.

L'invention concerne un dispositif centrifuge destiné à organiser à haute vitesse des produits en vrac, comprenant :
- une cuve destinée à recevoir les produits en vrac,
- un plateau, tournant, incliné par rapport à l'axe de la cuve, constituant le fond de cuve
- un bord de cuve, tournant dans le même sens que le plateau, définissant une piste horizontale coaxiale à la cuve, s'étendant le long de la périphérie de la cuve, ledit bord de cuve étant situé en hauteur au niveau du point le plus haut du plateau, définissant en cet endroit une zone de transfert de produits centrifugés entre le plateau et le bord de cuve, ledit bord de cuve s'étendant depuis cette zone de transfert jusqu' à une sortie du dispositif pour les produits organisés,
- une ceinture, sensiblement verticale, s'étendant sur le diamètre externe du bord de cuve, périphérique, et sur laquelle sont plaqués les produits présents sur le bord de cuve, sous l'effet de la force centrifuge,
- des moyens pour entraîner en rotation le plateau et des moyens pour entraîner en rotation le bord de cuve.

Selon l'invention, ledit dispositif présente un système de débourrage, automatique, comprenant :
- un organe de création de bourrage, dit organe de bourrage destiné à définir une zone de bourrage pour un produit mal positionné sur le bord de cuve, comprenant une butée, qui au moins dans une première position de l'organe de bourrage, est espacée de la ceinture et définit avec cette dernière un gabarit de passage maximal pour les produits organisés sur le bord de cuve,
- un dispositif de détection, ciblant la zone de bourrage, apte à détecter un bourrage créé sur la zone de bourrage,
- un volet déflecteur, positionné entre la zone de transfert et la zone de bourrage, suivant le sens de transfert des produits sur le bord de cuve, mobile entre une position rétractée autorisant le transfert des produits circulant sur le bord de cuve vers la sortie, et une position déployée dans laquelle les produits centrifugés sur le bord de cuve sont déviés et recyclés par le volet déflecteur vers le fond de la cuve,
- un dispositif éjecteur, positionné au niveau de la zone de bourrage, destiné à libérer les produits bloqués dans la zone de bourrage, comprenant :
   - ledit organe de bourrage, qui, mobile, est apte à s'escamoter depuis la première position vers une deuxième position où la butée est dans une position plus éloignée du bord de cuve,
   - un organe d'éjection, mobile, destiné à pousser les produits présents sur le bord de cuve vers le fond de cuve,
- des moyens de commande, présentant pour entrée le signal du dispositif de détection, configurés pour mettre en oeuvre une séquence de débourrage, dès la détection d'un bourrage par le dispositif de détection, ladite séquence de débourrage comprenant les étapes suivantes :
   - actionner le volet déflecteur depuis sa position rétractée vers sa position déployée de manière à dévier et recycler les produits centrifugés sur le bord de cuve vers le fond de la cuve, et successivement,
   - actionner le dispositif éjecteur de telle façon à retourner les produits bloqués dans la zone de bourrage dans le fond de la cuve.

Selon des caractéristiques optionnelles de l'invention prises seules ou en combinaison :
- le dispositif comprend un déflecteur fixe saillant de la ceinture, positionné au-dessus et à distance verticale du bord de cuve, entre la zone de transfert et la position du volet déflecteur, de telle façon à :
   - retourner vers le fond de cuve un produit superposé à un autre produit sur le bord de cuve,
   - autoriser le passage de produits correctement organisés sur le bord de cuve, les produits circulant sous le déflecteur fixe ;
- ledit organe d'éjection est un volet d'éjection présentant une première position rétractée dans la ceinture, et une deuxième position déployée permettant de pousser vers le fond de la cuve les produits présents sur le bord de cuve;
- ledit organe de bourrage est un organe pivotant depuis ladite première position vers ladite deuxième position dans laquelle la butée est dans une position plus éloignée de la ceinture, l'axe de pivot étant horizontal, d'axe orienté sensiblement tangentiellement à la périphérie de la cuve ;
- ledit organe de bourrage est solidaire en pivot d'une bride fixée sur une couronne à la partie supérieure de la cuve, un actionneur reliant la bride et ledit organe de bourrage ;
- le dispositif de détection est fixé à la bride par l'intermédiaire d'un support d'inclinaison orientable ;
- ledit organe de bourrage comprend une tôle, sensiblement verticale, dans ladite première position de l'organe de bourrage, dont la surface interne est espacée de la ceinture d'une distance définissant l'épaisseur maximale de passage pour les produits sur la couronne ;
- la butée est constituée par le bord avant de la tôle, recourbée en direction de l'intérieur de la cuve ;
- la butée définit une zone de bourrage, située juste en amont de la sortie ;
- le volet pivotant du volet déflecteur et/ou du volet d'éjection est articulé en pivot suivant un axe de rotation verticale à une chape solidaire d'une partie fixe du dispositif, un actionneur reliant le volet à ladite chape ;
- le mécanisme du système de débourrage automatique est dépourvu de carter de protection, l'accès supérieur à la cuve étant libre.

L'invention sera mieux comprise à la lecture de la description accompagnée des dessins en annexe parmi lesquels :

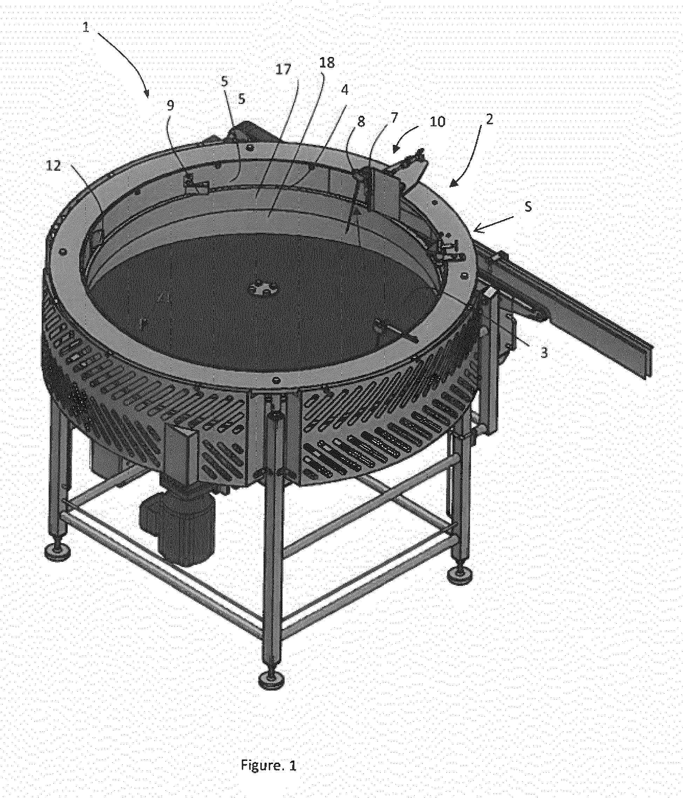

- La figure 1 est une vue en perspective d'un dispositif centrifuge conforme à l'invention, selon un mode de réalisation,
- La figure 2 est une vue de dessus du dispositif illustré à la figure 1 sur lequel est illustré schématiquement le trajet des produits, (sans bourrage)
- La figure 3 est une vue de détail du dispositif illustré à la figure 1, en fonctionnement, illustrant particulièrement un déflecteur fixe dont la fonction est de dévier vers le fond de cuve les produits superposés sur d'autres produits circulant sur le bord de cuve,

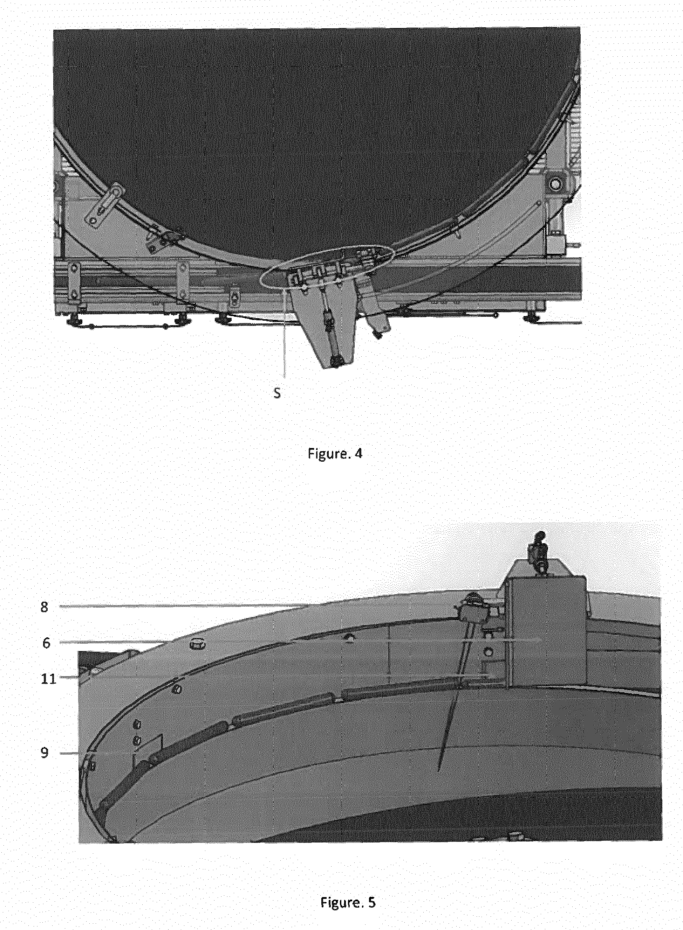

- La figure 4 est une vue de dessus du dispositif illustré à la figure 1, en fonctionnement, dans la position de repos du dispositif éjecteur, illustrant en détail le trajet des produits jusqu'à la sortie, les produits étant repris en aval de la sortie par un convoyeur rectiligne,
- La figure 5 est une vue en perspective du dispositif tel qu'illustré à la figure 4, en fonctionnement, dans la position de repos du dispositif éjecteur, et dans la position rétractée du volet déflecteur,
- Les figures 6 et 7 sont deux vues consécutives, de détail, illustrant le passage du volet déflecteur de sa position rétractée dans la ceinture, vers la position déployée où ledit volet renvoie les produits dans le fond de la cuve,

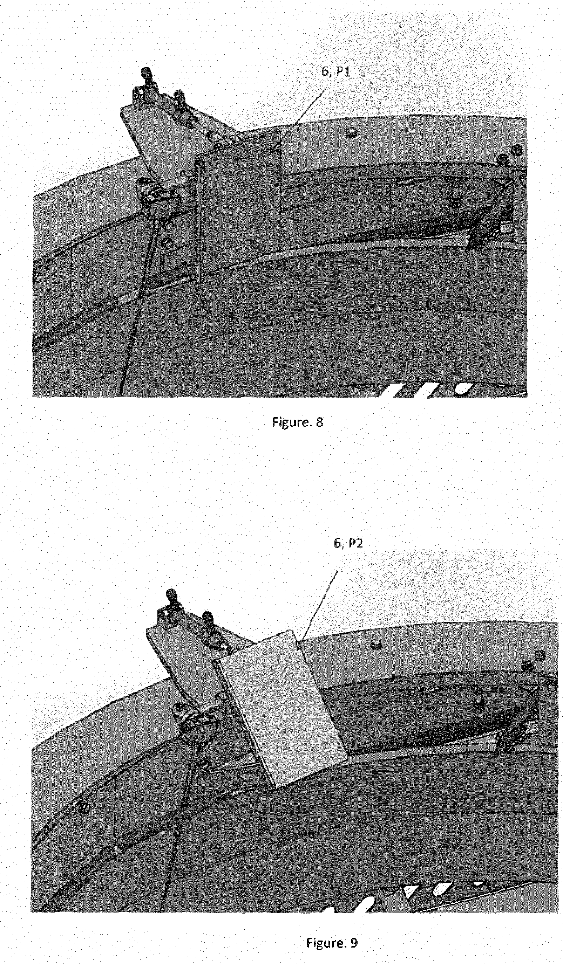

- La figure 8 est une vue en perspective de détail du dispositif éjecteur dans sa position de repos, c'est-à-dire dans la position rétractée du volet d'éjection et dans la première position de l'organe de bourrage,
- La figure 9 est une vue en perspective de détail du dispositif éjecteur dans sa position active, c'est-à-dire dans la position déployée du volet d'éjection et dans la deuxième position de l'organe de bourrage,

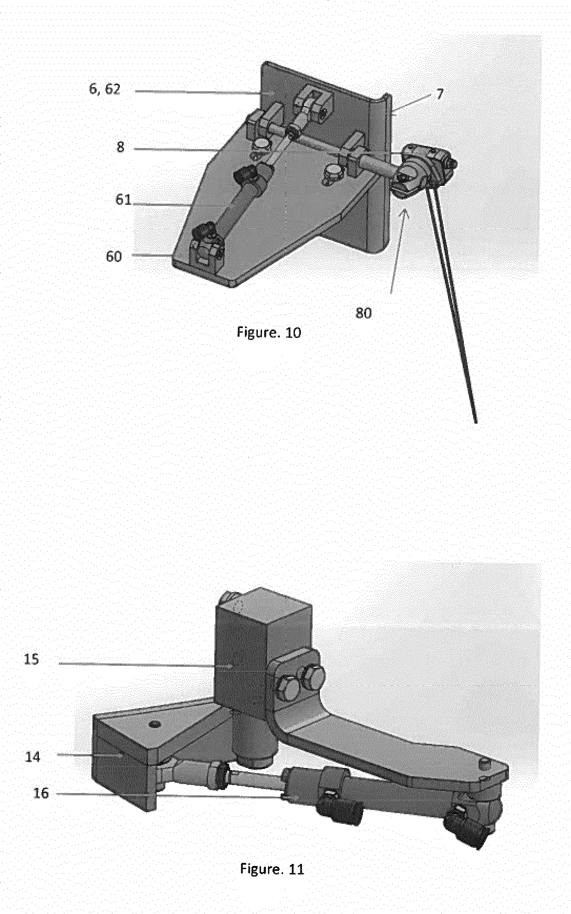

- La figure 10 est une vue de détail d'un ensemble autoportant comprenant l'organe de bourrage, la bride de fixation de l'organe de bourrage, le vérin d'actionnement de l'organe de bourrage, ainsi que le dispositif de détection solidaire de la bride,
- La figure 11 est une vue de détail d'un ensemble volet, chape et actionneur, ledit volet pouvant être celui du volet déflecteur, ou du volet d'éjection.

Aussi l'invention concerne un dispositif centrifuge 1 destiné à organiser à haute vitesse des produits en vrac, comprenant :
- une cuve 2 destinée à recevoir les produits en vrac,
- un plateau 3, tournant, incliné par rapport à l'axe de la cuve 2, constituant le fond de cuve
- un bord de cuve 4, tournant dans le même sens que le plateau, définissant une piste horizontale coaxiale à la cuve, s'étendant le long de la périphérie de la cuve, ledit bord de cuve étant situé en hauteur au niveau du point le plus haut du plateau 3, définissant en cet endroit une zone de transfert ZT de produits centrifugés entre le plateau 3 et le bord de cuve 4, ledit bord de cuve 4 s'étendant depuis cette zone de transfert ZT jusqu'à une sortie S du dispositif pour les produits organisés,

- une ceinture 5, sensiblement verticale, s'étendant sur le diamètre externe du bord de cuve 4, périphérique, et sur laquelle sont plaqués les produits présents sur le bord de cuve 4, sous l'effet de la force centrifuge,
- des moyens pour entraîner en rotation le plateau 3 et des moyens pour entraîner en rotation le bord de cuve 4.

Une telle structure de dispositif centrifuge est connue en soi de l'état de la technique. On entend par cuve 2 la réunion du plateau 3, tournant, qui constitue le fond de la cuve, et une paroi latérale périphérique de la cuve, cylindrique, qui peut comprendre :
- une roue 17, mobile en rotation, formant solidairement le bord de cuve 4 à sa partie supérieure, et
- une partie cylindrique fixe 18, à sa partie inférieure.

De préférence, les moyens pour entrainer en rotation le plateau 3 et les moyens pour entraîner en rotation le bord de cuve 4, et en particulier la roue 17 sont indépendants. Les vitesses de rotation de ces deux éléments (plateau tournant 3 et bord de cuve 4) peuvent être réglées indépendamment, en particulier en fonction des produits à traiter. Un tel dispositif permet d'organiser des produits en vrac présents dans la cuve, qui sont, sous l'effet de la force centrifuge engendrée par le plateau tournant amenés jusqu'à la zone de transfert, puis transférés sur le bord de cuve qui les convoie en file, les uns à la suite des autres et jusqu'à une sortie physique du dispositif.

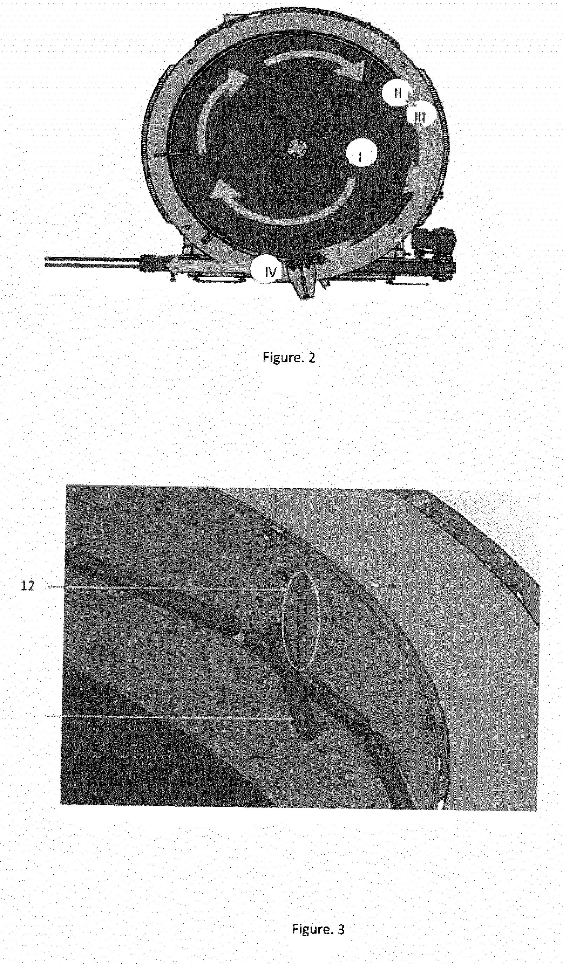

La trajectoire d'un produit est illustrée à titre d'exemple à la figure 2, en différentes positions du produit au cours de la trajectoire de fonctionnement, à savoir :
- position I du produit sur le plateau tournant,
- position II du produit sur le plateau tournant, au niveau de la zone du transfert,
- position III, immédiatement suivante, du produit transféré sur le bord de cuve, et
- position IV du produit transféré par le bord de cuve jusqu'à un convoyeur rectiligne, reprenant les produits en aval à la sortie physique entre le bord de cuve et le convoyeur rectiligne.

L'invention concerne plus particulièrement dans un tel dispositif, un système de débourrage, automatique.

Un tel système de débourrage comprend un organe de création de bourrage, dit organe de bourrage 6, un dispositif de détection de bourrage 8, un volet déflecteur 9 et un dispositif éjecteur 10.

L'organe de création de bourrage, dit organe de bourrage 6 présente pour fonction de définir une zone de bourrage ZB déterminée pour un produit mal positionné sur le bord de cuve 4. A cet effet, l'organe de bourrage 6 comprend une butée 7, qui au moins dans une première position de l'organe de bourrage 6, est espacée de la ceinture 5 et définit avec cette dernière un gabarit de passage maximal pour les produits organisés sur le bord de cuve 4.

Ce gabarit est la distance pertinente entre cette butée 7 et la ceinture 5, sensiblement radiale à la cuve qui, d'une part, est supérieure à la largeur des produits et de manière à autoriser le passage de produits correctement organisés sur le bord de cuve, mais qui, d'autre part, est suffisamment petite pour provoquer un blocage lorsque deux produits se chevauchent sur la largeur du bord de cuve 4.

De préférence, cette distance est réglable, lors de la maintenance, par différents positionnements possibles de l'organe de bourrage 6 par rapport à la ceinture 5, la direction de réglage étant sensiblement radiale à la cuve.

La zone de bourrage ZB est avantageusement déterminée de préférence, juste en amont de la sortie physique du dispositif, autorisant le transfert des produits du bord de cuve sur la bande du convoyeur rectiligne.

Ledit dispositif de détection de bourrage 8 est de préférence un organe de détection sans contact, par exemple optique, et qui a pour fonction de détecter un blocage de produits au niveau de la zone de bourrage ZB, autrement dit un bourrage.

En fonctionnement normal, les produits, lorsque correctement organisés sur le bord de cuve 4 ne sont pas parfaitement jointifs, mais au contraire sont espacés successivement les uns des autres, ce qui permet au dispositif de détection de bourrage de voir un flux discontinu de produits. La détection continue pendant une période déterminée, par exemple, supérieure au temps de passage de deux produits ou plus, peut être interprétée comme la présence d'un bourrage, ce qui permet de déclencher la séquence de débourrage.

Dans le cas de produits notamment longilignes, en particulier tels que des saucisses, le bord de cuve 4 peut être entrainé à une vitesse de rotation supérieure à celle du plateau 3, et afin de garantir la présence d'inter-espaces, visibles par le dispositif de détection, entre les différents produits en file.

Dans le cas de produit en particulier à bouts ronds tel que par exemple des steaks hachés, la vitesse de rotation du plateau tournant 3 peut être à l'inverse supérieure à celle du bord de cuve 4 et dans le but de maximiser le rendement : compte tenu des bouts rond, le dispositif de détection, lorsque correctement positionné, permet toujours de discerner un inter-espace entre deux produits successif de la file, au moins au bout d'un court instant.

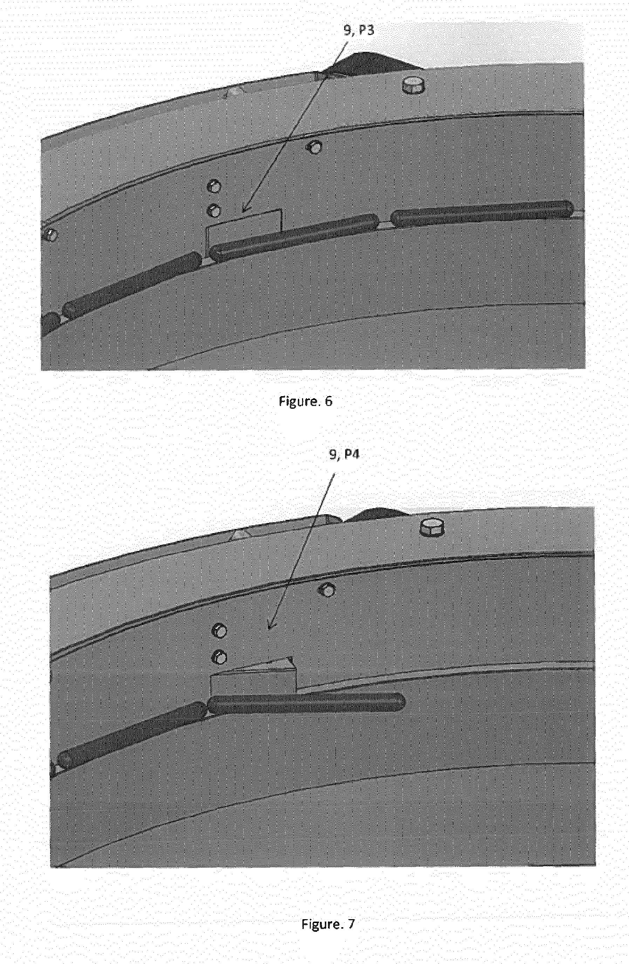

Le volet déflecteur 9 est positionné entre la zone de transfert ZT et la zone de bourrage ZB, ci-dessus déterminées, suivant le sens de transfert des produits sur le bord de cuve 4. Ce volet déflecteur 9 est mobile entre une position rétractée P3 (illustrée à titre d'exemple à la figure 6) autorisant le transfert des produits circulant sur le bord de cuve 4 jusqu'à la sortie S, et une position déployée P4 dans laquelle les produits centrifugés sur le bord de cuve 4 sont déviés et recyclés par le volet déflecteur 9 vers le fond de la cuve.

Dans le cadre de l'invention, la fonction de ce volet déflecteur 9, est, lorsqu'un bourrage est détecté de recycler dans le fond de cuve le flux de produits centrifugés, et afin de ne pas alimenter plus encore en produits la zone de bourrage ZB. Ce volet déflecteur 9 permet ainsi de ne plus alimenter la zone de bourrage en produits, et avantageusement sans interrompre les rotations du plateau incliné, et du bord de cuve 4.

Ce volet déflecteur peut être déployé en d'autres occasions, par exemple lorsqu'il est nécessaire de compter les produits présents dans la cuve.

Le dispositif éjecteur 10, est positionné au niveau de la zone de bourrage ZB, et présente pour fonction de libérer les produits bloqués dans la zone de bourrage ZB, successivement à la détection d'un bourrage. Ce dispositif éjecteur 10, comprend :
- ledit organe de bourrage 6, qui, mobile, est apte à s'escamoter depuis la première position P1 vers une deuxième position P2 où la butée 7 est dans une position plus éloignée du bord de cuve 4,
- un organe d'éjection 11, mobile, destiné à pousser les produits présents sur bord de cuve 4 vers le fond de cuve.

Ces deux éléments, à savoir organe de bourrage 6 et organe d'éjection 11 sont actionnés conjointement, et de préférence simultanément, de la première position P1 vers la deuxième position P2 pour l'organe de bourrage 6, et d'une position rétractée P5 vers une position déployée P6 pour l'organe d'éjection pour pousser physiquement les produits bloqués au niveau de la zone ZB, en direction du fond de cuve.

Le dispositif présente des moyens de commande, présentant pour entrée le signal du dispositif de détection 8, configurés pour mettre en oeuvre une séquence de débourrage, dès la détection d'un bourrage par le dispositif de détection 8.

De tels moyens de commande peuvent comprendre essentiellement un automate programmable. La fonction des moyens de commande est de mettre en oeuvre une séquence de débourrage comprenant les étapes suivantes :
- actionner le volet déflecteur 9 depuis sa position rétractée P3 vers sa position déployée P4 de manière à dévier et recycler les produits centrifugés sur le bord de cuve 4 vers le fond de la cuve, et successivement,
- actionner le dispositif éjecteur 10 de telle façon à retourner les produits bloqués dans la zone de bourrage ZB dans le fond de la cuve.

Dès la séquence de débourrage terminée, le volet déflecteur 9, et le dispositif éjecteur 10, retournent dans leur position initiale, à savoir dans la position rétractée P3 du volet déflecteur d'une part, et dans la première position P1 de l'organe de bourrage 6, et dans la position rétractée P5 du dispositif d'éjection, d'autre part.

Selon un mode de réalisation de l'invention, le dispositif peut comprendre un déflecteur fixe 12, saillant de la ceinture 5, positionné au-dessus et à distance verticale du bord de cuve 4 et de préférence disposé sur le trajet des produits entre la zone de transfert ZT et la position du volet déflecteur 9.

La fonction de ce déflecteur fixe 12 est illustrée à titre d'exemple à la figure 3.

Ce déflecteur présente pour fonction de:
- retourner vers le fond de cuve un produit superposé à un autre produit sur le bord de cuve 4,
- autoriser le passage de produits correctement organisés sur le bord de cuve, les produits circulant sous le déflecteur fixe 12.

La position en hauteur du déflecteur fixe est de préférence réglable. Ce réglage permet d'ajuster la hauteur du déflecteur 12 en fonction de la hauteur des produits de sorte à ce que le déflecteur fixe remplisse sa fonction.

Ledit organe d'éjection 11 peut être est un volet d'éjection présentant une première position rétractée P5 dans la ceinture 5, et une deuxième position déployée P6 permettant de pousser vers le fond de la cuve les produits présents sur le bord de cuve 4. Le volet pivotant 14 du volet déflecteur 9 (et/ou du volet d'éjection) est articulé en pivot suivant un axe de rotation verticale à une chape 15 solidaire d'une partie fixe du dispositif, un actionneur 16 tel qu'un vérin pneumatique reliant le volet à la chape 15. Ledit organe de bourrage 6 peut être un organe pivotant depuis ladite première position P1 vers ladite deuxième position P2 dans laquelle la butée 7 est dans une position plus éloignée de la ceinture 5. De préférence, l'axe de pivot est horizontal, d'axe orienté sensiblement tangentiellement à la périphérie de la cuve. Cette cinématique en pivot de l'organe de bourrage est intéressante en ce qu'elle ne représente pas un risque de pincement obligeant la mise en place d'un carter de sécurité.

Ledit organe de bourrage 6 peut être solidaire en pivot d'une bride 60 fixée à la partie supérieure fixe du dispositif, par exemple sur une couronne 13 fixe, sur la périphérie de la cuve, un actionneur 61 tel qu'un vérin pneumatique reliant la bride 60 et ledit organe de bourrage 6.

La bride 60 peut être de position réglable sur la partie fixe supérieure du dispositif, suivant la direction radiale à la cuve, afin d'ajuster le gabarit de passage maximal. La bride peut se présenter essentiellement sous la forme d'une plaque horizontale dont la partie inférieure est fixée à la couronne, s'étendant en saillie vers l'intérieur de la cuve. L'organe de bourrage 6 comprend une tôle 62, sensiblement verticale, dans ladite première position P1 de l'organe de bourrage 6, dont la surface interne est espacée de la ceinture 5 d'une distance définissant l'épaisseur maximale de passage pour les produits sur la couronne 13.

Cette tôle 62 s'étend depuis la bride 60, vers le bas et jusqu'à hauteur du bord de cuve 4. L'articulation en pivot entre la tôle 62 et la bride est d'axe horizontal, orientée sensiblement tangentielle à la périphérie de la cuve, et par exemple positionnée au-dessus de la bride 60.

Lorsque l'actionneur 61 est activé (i.e le vérin vers sa position de compression), la tôle est levée dans une position où elle s'écarte du bord de cuve et afin de permettre l'éjection des produits dans le fond de cuve.

La butée 7 peut être constituée par le bord avant de la tôle 62, recourbée en direction de l'intérieur de la cuve 2. La butée 7, dans ce cas particulier, et plus généralement, de préférence, ne présente pas d'arête vive susceptible de provoquer une détérioration du produit mal positionné bloqué par la butée 7.

Le dispositif de détection 8 peut être avantageusement fixé à la bride 60 par l'intermédiaire d'un support de préférence d'inclinaison orientable.

Le dispositif centrifuge conforme à l'invention trouve une application pour organiser des produits en vrac, quel que soit le type de produits, alimentaires ou non. L'invention trouve encore une application particulière pour organiser des produits en vrac, sensible à la détérioration/déchirement.

Ce dispositif centrifuge, a donné parfaite satisfaction pour des produits fragiles tels que des saucisses.

Avantageusement, le mécanisme du système de débourrage automatique peut être dépourvu de carter de protection, l'accès supérieur à la cuve étant libre, c'est-à-dire sans présence de carter de protection, (sous forme de grille ou autre) restreignant l'accès aux surfaces internes du dispositif centrifuge destinées à être en contact avec les produits, et en particulier à la surface du bord de cuve, ainsi qu'à la surface du plateau 2, voir celle de la ceinture 5.

Le dispositif centrifuge est ainsi de nettoyage particulièrement aisé, ce qui est un grand avantage dans le domaine alimentaire.

Naturellement d'autres modes de réalisations auraient pu être envisagés par l'homme du métier sans pour autant sortir du cadre de l'invention tel que défini par les revendications ci-après.

### NOMENCLATURE

1. Dispositif centrifuge,
2. Cuve,
3. Plateau incliné,
4. Bord de cuve,
5. Ceinture,
6. Organe de bourrage,
7. Butée,
8. Dispositif de détection,
9. Volet déflecteur,
10. Dispositif éjecteur,
11. Organe d'éjection,
12. Déflecteur fixe,
13. Couronne supérieure (Cuve),
14. Volet pivotant (Déflecteur fixe et/ou organe d'éjection),
15. Chape,
16. Actionneur,
17. Roue (paroi latérale cylindrique mobile de la cuve),
18. Paroi cylindrique fixe (cuve),
60. Bride (Fixation organe de bourrage),
61. Actionneur (Organe de bourrage),
62. Tôle (Organe de bourrage).
P1, P2. Première et deuxième position de l'organe de bourrage,
P3, P4. Position rétractée et position déployée du volet déflecteur,
P5, P6. Position rétractée et position déployée du volet éjecteur (Organe d'éjection),
S. Sorties,
ZT. Zone de transfert de produit (entre le plateau et le bord de cuve),
ZB. Zone de bourrage (défini par l'organe de bourrage).

## Revendications

1. Dispositif centrifuge (1) destiné à organiser à haute vitesse des produits en vrac, comprenant :
- une cuve (2) destinée à recevoir les produits en vrac,
- un plateau (3), tournant, incliné par rapport à l'axe de la cuve (2), constituant le fond de cuve
- un bord de cuve (4), tournant dans le même sens que le plateau, définissant une piste horizontale coaxiale à la cuve, s'étendant le long de la périphérie de la cuve, ledit bord de cuve étant situé en hauteur au niveau du point le plus haut du plateau (3), définissant en cet endroit une zone de transfert (ZT) de produits centrifugés entre le plateau (3) et le bord de cuve (4), ledit bord de cuve (4) s'étendant depuis cette zone de transfert (ZT) jusqu' à une sortie (S) du dispositif pour les produits organisés,
- une ceinture (5), sensiblement verticale, s'étendant sur le diamètre externe du bord de cuve (4), périphérique, et sur laquelle sont plaqués les produits présents sur le bord de cuve (4), sous l'effet de la force centrifuge,
- des moyens pour entraîner en rotation le plateau (3) et des moyens pour entraîner en rotation le bord de cuve (4)
**caractérisé en ce que** ledit dispositif présente un système de débourrage, automatique, comprenant :
- un organe de création de bourrage, dit organe de bourrage (6) destiné à définir une zone de bourrage (ZB) pour un produit mal positionné sur le bord de cuve (4), comprenant une butée (7), qui au moins dans une première position de l'organe de bourrage (6), est espacée de la ceinture (5) et définit avec cette dernière un gabarit de passage maximal pour les produits organisés sur le bord de cuve (4),
- un dispositif de détection (8), ciblant la zone de bourrage, apte à détecter un bourrage crée sur la zone de bourrage (ZB),
- un volet déflecteur (9), positionné entre la zone de transfert (ZT) et la zone de bourrage (ZB), suivant le sens de transfert des produits sur le bord de cuve(4), mobile entre une position rétractée autorisant le transfert des produits circulant sur le bord de cuve (4) vers la sortie (S), et une position déployée dans laquelle les produits centrifugés sur le bord de cuve (4) sont déviés et recyclés par le volet déflecteur (9) vers le fond de la cuve,
- un dispositif éjecteur (10), positionné au niveau de la zone de bourrage (ZB), destiné à libérer les produits bloqués dans la zone de bourrage (ZB), comprenant :
- ledit organe de bourrage (6), qui, mobile, est apte à s'escamoter depuis la première position (P1) vers une deuxième position (P2) où la butée (7) est dans une position plus éloignée du bord de cuve (4),
- un organe d'éjection (11), mobile, destiné à pousser les produits présents sur bord de cuve (4) vers le fond de cuve,
- des moyens de commande, présentant pour entrée le signal du dispositif de détection (8), configurés pour mettre en oeuvre une séquence de débourrage, dès la détection d'un bourrage par le dispositif de détection (8), ladite séquence de débourrage comprenant les étapes suivantes :
- actionner le volet déflecteur (9) depuis sa position rétractée (P3) vers sa position déployée (P4) de manière à dévier et recycler les produits centrifugés sur le bord de cuve (4) vers le fond de la cuve, et successivement,
- actionner le dispositif éjecteur (10) de telle façon à retourner les produits bloqués dans la zone de bourrage (ZB) dans le fond de la cuve.

2. Dispositif centrifuge selon la revendication 1, comprenant un déflecteur fixe (12), saillant de la ceinture (5), positionné au-dessus et à distance verticale du bord de cuve (4), entre la zone de transfert (ZT) et la position du volet déflecteur (9), de telle façon à :
- retourner vers le fond de cuve un produit superposé à un autre produit sur le bord de cuve (4),
- autoriser le passage de produits correctement organisés sur le bord de cuve, les produits circulant sous le déflecteur fixe (12).

3. Dispositif centrifuge selon les revendications 1 ou 2, dans lequel ledit organe d'éjection (11) est un volet d'éjection présentant une première position rétractée (P5) dans la ceinture (5), et une deuxième position déployée (P6) permettant de pousser vers le fond de la cuve les produits présents sur le bord de cuve (4).

4. Dispositif centrifuge selon l'une des revendications 1 à 3, dans lequel ledit organe de bourrage (6) est un organe pivotant depuis ladite première position (P1) vers ladite deuxième position (P2) dans laquelle la butée (7) est dans une position plus éloignée de la ceinture (5), l'axe de pivot étant horizontal, d'axe orienté sensiblement tangentiellement à la périphérie de la cuve.

5. Dispositif selon la revendication 4, dans lequel ledit organe de bourrage (6) est solidaire en pivot d'une bride (60) fixée sur une couronne (13) à la partie supérieure de la cuve, un actionneur (61) reliant la bride et ledit organe de bourrage (6).

6. Dispositif selon la revendication 5, dans lequel le dispositif de détection (8) est fixé à la bride (60) par l'intermédiaire d'un support d'inclinaison orientable.

7. Dispositif selon l'une des revendications 1 à 6, dans lequel ledit organe de bourrage (6) comprend une tôle (62), sensiblement verticale, dans ladite première position de l'organe de bourrage (6), dont la surface interne est espacée de la ceinture d'une distance définissant l'épaisseur maximale de passage pour les produits sur la couronne (4).

8. Dispositif selon la revendication 7, dans lequel la butée (7) est constituée par le bord avant de la tôle (62), recourbée en direction de l'intérieur de la cuve (2).

9. Dispositif selon l'une des revendications 1 à 8, dans lequel la butée (7) définit une zone de bourrage (ZB), située juste en amont de la sortie (S).

10. Dispositif selon l'une des revendications 1 à 9, dans lequel le volet pivotant (14) du volet déflecteur (9) et/ou du volet d'éjection est articulé en pivot suivant un axe de rotation verticale à une chape (15) solidaire d'une partie fixe du dispositif, un actionneur (16) reliant le volet à ladite chape (15).

11. Dispositif selon l'une des revendications 1 à 10, dans lequel le mécanisme du système de débourrage automatique est dépourvu de carter de protection, l'accès supérieur à la cuve étant libre.

## Patentansprüche

1. Schleudervorrichtung (1), die zur Organisation von Schüttgut-Produkten mit hoher Geschwindigkeit bestimmt ist, umfassend:
- einen Behälter (2), der zur Aufnahme der Schüttgut-Produkte bestimmt ist,
- einen sich drehenden Teller (3), der im Verhältnis zur Achse des Behälters (2) geneigt ist, der den Behälterboden bildet
- einen Behälterrand (4), der sich in dieselbe Richtung dreht, wie der Teller, eine horizontale, zum Behälter koaxiale Spur definierend, die sich entlang des Umfangs des Behälters erstreckt, wobei sich der besagte Behälterrand in der Höhe im Bereich des höchsten Punktes des Tellers (3) befindet, an dieser Stelle eine Transferzone (ZT) für Produkte definierend, die zwischen den Teller (3) und den Behälterrand (4) geschleudert werden, wobei sich der besagte Behälterrand (4) von dieser Transferzone (ZT) bis zu einem Ausgang (S) der Vorrichtung für die organisierten Produkte erstreckt,
- ein in etwa vertikales Führungsband (5), das sich über den Außendurchmesser des umlaufenden Behälterrandes (4) erstreckt, und gegen das die am Behälterrand (4) vorhandenen Produkte unter der Wirkung der Schleuderkraft gepresst werden,
- Mittel, um den Teller (3) in Drehung zu versetzen, und Mittel, um den Behälterrand (4) in Drehung zu versetzen
**dadurch gekennzeichnet, dass** die besagte Vorrichtung ein automatisches Abstreifersystem aufweist, umfassend:
- ein Organ zur Bildung einer Anhäufung, Anhäufungsorgan (6) genannt, das dazu bestimmt ist, eine Anhäufungszone (ZB) für ein an dem Behälterrand (4) schlecht positioniertes Produkt zu definieren, einen Anschlag (7) umfassend, der zumindest in einer ersten Position des Anhäufungsorgans (6) im Abstand vom Führungsband (5) angeordnet ist, und mit diesem letzteren eine maximale Durchlassgröße für die Produkte definiert, die an dem Behälterrand (4) organisiert sind,
- eine Erfassungsvorrichtung (8), die auf die Anhäufungszone gerichtet ist, in der Lage, eine Anhäufung zu erfassen, die in der Anhäufungszone (ZB) gebildet wird,
- eine Abweiserklappe (9), zwischen der Transferzone (ZT) und der Anhäufungszone (ZB) positioniert, in die Transferrichtung der Produkte am Behälterrand (4), zwischen einer eingezogenen Position, welche den Transfer der Produkte zulässt, die an dem Behälterrand (4) zum Ausgang (S) zirkulieren, und einer ausgefahrenen Position beweglich ist, in der die an den Behälterrand (4) geschleuderten Produkte durch die Abweiserklappe (9) umgeleitet und zum Boden des Behälters zurückgeführt werden,
- eine Auswerfervorrichtung (10), die im Bereich der Anhäufungszone (ZB) positioniert ist, die dazu bestimmt ist, die in der Anhäufungszone (ZB) blockierten Produkte zu befreien, umfassend:
- das besagte Anhäufungsorgan (6), das, weil beweglich, imstande ist, von der ersten Position (P1) in eine zweite Position (P2) überzugehen, wo der Anschlag (7) in einer Position ist, die weiter vom Behälterrand (4) entfernt ist,
- ein bewegliches Auswurforgan (11), das dazu bestimmt ist, die Produkte, die an dem Behälterrand (4) vorhanden sind, zum Boden des Behälters zu schieben,
- Steuermittel, die als Eingang das Signal der Erfassungsvorrichtung (8) präsentieren, konfiguriert, um unmittelbar nach dem Erfassen einer Anhäufung durch die Erfassungsvorrichtung (8) eine Abstreifsequenz anzuwenden, wobei die besagte Abstreifsequenz die folgenden Schritte umfasst:
- Betätigen der Abweiserklappe (9) von ihrer eingezogenen Position (P3) in ihre ausgefahrene Position (P4), um die an den Behälterrand (4) geschleuderten Produkte auf den Behälterboden abzuweisen und zurückzuführen, und danach
- die Auswerfervorrichtung (10) derart zu betätigen, um die in der Anhäufungszone (ZB) blockierten Produkte zum Boden des Behälters umzukehren.

2. Schleudervorrichtung nach Anspruch 1, einen feststehenden Abweiser (12) umfassend, der über das Führungsband (5) hinaus übersteht, über und in vertikalem Abstand zum Behälterrand (4) zwischen der Transferzone (ZT) und der Position der Abweiserklappe (9) derart positioniert, um:
- ein Produkt, das ein anderes Produkt an dem Behälterrand (4) überlagert, zum Boden des Behälters umzukehren,
- den Durchlauf von korrekt organisierten Produkten an dem Behälterrand zuzulassen, wobei die Produkte unter dem feststehenden Abweiser (12) hindurch zirkulieren.

3. Schleudervorrichtung nach den Ansprüchen 1 oder 2, wobei das besagte Auswurforgan (11) eine Auswurfklappe ist, die eine erste eingezogene Position (P5) an dem Führungsband (5), und eine zweite ausgefahrene Position (P6) aufweist, die es ermöglicht, die Produkte, die am Behälterrand (4) vorhanden sind, zum Boden des Behälters zu schieben.

4. Schleudervorrichtung nach einem der Ansprüche 1 bis 3, wobei das besagte Anhäufungsorgan (6) ein Organ ist, das aus der besagten ersten Position (P1) in die besagte zweite Position (P2) schwenkt, wobei der Anschlag (7) in einer Position ist, die weiter vom Führungsband (5) entfernt ist, wobei die Schwenkachse horizontal ist, mit einer Achse, die in etwa tangential zum Umfang des Behälters ausgerichtet ist.

5. Vorrichtung nach Anspruch 4, wobei das besagte Anhäufungsorgan (6) schwenkbar fest mit einem Flansch (60) verbunden ist, der auf einem Kranz (13) an dem oberen Abschnitt des Behälters befestigt ist, wobei ein Steller (61) den Flansch und das besagte Anhäufungsorgan (6) miteinander verbindet.

6. Vorrichtung nach Anspruch 5, wobei die Erfassungsvorrichtung (8) über einen ausrichtbaren Neigungshalter an dem Flansch (60) befestigt ist.

7. Vorrichtung nach einem der Ansprüche 1 bis 6, wobei das besagte Anhäufungsorgan (6) in der ersten Position des Anhäufungsorgans (6) ein in etwa vertikales Blech (62) umfasst, dessen Innenfläche in einem Abstand von dem Führungsband angeordnet ist, der die maximale Durchgangsdicke für die Produkte an dem Kranz (4) definiert.

8. Vorrichtung nach Anspruch 7, wobei der Anschlag (7) durch den vorderen Rand des Blechs (62) gebildet wird, das in Richtung der Innenseite des Behälters (2) gekrümmt ist.

9. Vorrichtung nach einem der Ansprüche 1 bis 8, wobei der Anschlag (7) eine Anhäufungszone (ZB) definiert, die sich knapp vor dem Ausgang (S) befindet.

10. Vorrichtung nach einem der Ansprüche 1 bis 9, wobei die Schwenkklappe (14) der Abweiserklappe (9) und/ oder die Auswurfklappe entlang einer zu einem Gelenkkopf (15) vertikalen Drehachse schwenkbar angelenkt ist, der fest mit einem feststehenden Abschnitt der Vorrichtung verbunden ist, wobei ein Steller (16) die Klappe mit dem besagten Gelenkkopf (15) verbindet.

11. Vorrichtung nach einem der Ansprüche 1 bis 10, wobei der Mechanismus des automatischen Abstreifersystems keine Schutzabdeckung umfasst, wodurch der Zugang von oben zum Behälter frei ist.

## Claims

1. Centrifugal device (1) intended for the high-speed organisation of bulk products, comprising:
- a tank (2) intended for receiving the bulk products,
- a rotating plate (3), inclined relative to the axis of the tank (2), forming the tank bottom
- a tank edge (4), rotating in the same direction as the plate, defining a horizontal track coaxial to the tank, extending along the periphery of the tank, said tank edge being located at a height at the level of the highest point of the plate (3), defining in this location a transfer zone (ZT) of centrifuged products between the plate (3) and the tank edge (4), said tank edge (4) extending from this transfer zone (ZT) to an outlet (S) of the device for organised products,
- a belt (5), substantially vertical, extending over the outer diameter of the tank edge (4), peripheral, and whereon are thrust the products present on the tank edge (4), under the effect of the centrifugal force,
- means for driving in rotation the plate (3) and means for driving in rotation the tank edge (4)
**characterised in that** said device has an automatic clogging system, comprising:
- a member for creating a clog, referred to as clogging member (6) intended to define a clogging zone (ZB) for a product that is incorrectly positioned on the tank edge (4), comprising a stop (7), which at least in a first position of the clogging member (6), is separated from the belt (5) and defines with the latter a maximum passage gauge for the products organised on the tank edge (4),
- a detection device (8), targeting the clogging zone, able to detect a clog created on the clogging zone (ZB),
- a deflector flap (9), positioned between the transfer zone (ZT) and the clogging zone (ZB), according to the direction of transfer of the products on the tank edge (4), mobile between a retracted position that authorises the transfer of products circulating on the tank edge (4) to the outlet (S), and a deployed position in which the centrifuged products on the tank edge (4) are diverted and recycled by the deflector flap (9) to the bottom of the tank,
- an ejector device (10), positioned on the clogging zone (ZB), intended to release the products blocked in the clogging zone (ZB), comprising:
-- said clogging member (6), which, mobile, is able to retract from the first position (P1) to a second position (P2) wherein the stop (7) is in a more separated position from the tank edge (4),
-- an ejection member (11), mobile, intended to push the products present on the tank edge (4) to the bottom of the tank,
- means for controlling, having for input the signal from the detection device (8), configured to implement a cleaning system, when a clog is detected by the detection device (8), said cleaning system comprising the following steps:
-- actuating the deflector flap (9) from its retracted position (P3) to its deployed position (P4) in such a way as to divert and recycle the centrifuged products on the tank edge (4) to the bottom of the tank, and successively,
-- actuating the ejector device (10) in such a way as to return the blocked products in the clogging zone (ZB) in the bottom of the tank.

2. Centrifugal device according to claim 1, comprising a fixed deflector (12), protruding from the belt (5), positioned above and at a vertical distance from the tank edge (4), between the transfer zone (ZT) and the position of the deflector flap (9), in such a way as to:
- return to the bottom of the tank a product superimposed on another product on the tank edge (4),
- authorise the passage of correctly organised products on the tank edge, with the products circulating under the fixed deflector (12).

3. Centrifugal device according to claims 1 or 2, wherein said ejection member (11) is an ejection flap that has a first retracted position (P5) in the belt (5), and a second deployed position (P6) that makes it possible to push to the bottom of the tank the products present on the tank edge (4).

4. Centrifugal device according to one of claims 1 to 3, wherein said clogging member (6) is a pivoting member from said first position (Pl) to said second position (P2) wherein the stop (7) is in a position that is more separated from the belt (5), with the pivot axis being horizontal, with an axis oriented substantially tangentially to the periphery of the tank.

5. Device according to claim 4, wherein said clogging member (6) is integral as a pivot with a flange (60) fixed on a crown (13) at the upper portion of the tank, with an actuator (61) connecting the flange and said clogging member (6).

6. Device according to claim 5, wherein the detection device (8) is fixed to the flange (60) by the intermediary of an orientable inclination support.

7. Device according to one of claims 1 to 6, wherein said clogging member (6) comprises a sheet (62), substantially vertical, in said first position of the clogging member (6), of which the inner surface is spaced from the belt by a distance defining the maximum thickness of the passage for the products on the crown (4).

8. Device according to claim 7, wherein the stop (7) is formed by the front edge of the sheet (62), curved in the direction of the inside of the tank (2).

9. Device according to one of claims 1 to 8, wherein the stop (7) defines a clogging zone (ZB), located immediately upstream of the outlet (S).

10. Device according to one of claims 1 to 9, wherein the pivoting flap (14) of the deflector flap (9) and/or of the ejection flap is hinged as a pivot along a vertical axis of rotation to a screed (15) integral with a fixed portion of the device, with an actuator (16) connecting the flap to said screed (15).

11. Device according to one of claims 1 to 10, wherein the mechanism of the automatic clogging system is devoid of a protective cover, with the upper access to the tank being free.
